# FASCICULE DE BREVET EUROPEEN

(11) **EP 3 484 736 B1**
(45) Date de publication et mention de la délivrance du brevet: **08.04.2020**
(21) Numéro de dépôt: 17740441.5
(22) Date de dépôt: 22.06.2017
(51) Int. Cl.: B60K 6/442, B60K 6/547, B60W 20/10, B60W 10/06, B60W 10/08, B60W 10/113, B60W 10/26, B60L 50/51, B60L 15/06

(54) **PROCÉDÉ DE COMMANDE DES ORGANES D'UNE TRANSMISSION HYBRIDE POUR VÉHICULE AUTOMOBILE**
VERFAHREN ZUR STEUERUNG DER ELEMENTE EINES HYBRIDGETRIEBES FÜR KRAFTFAHRZEUGE
METHOD FOR CONTROLLING THE MEMBERS OF A HYBRID TRANSMISSION FOR AUTOMOTIVE VEHICLE

(30) Priorité: 13.07.2016 FR 1656775
(43) Date de publication de la demande: 22.05.2019
(73) Titulaire: Renault SAS, 92100 Boulogne Billancourt (FR)
(72) Inventeur: MERIENNE, Ludovic, 91190 Gif sur Yvette (FR); BAUMANN, Thibault, 78150 Le Chesnay (FR)
(86) Numéro de dépôt international: PCT/FR2017/051664
(87) Numéro de publication internationale: WO 2018/011483

(56) Documents cités:
- EP-A1- 2 851 229
- EP-A2- 0 868 005
- WO-A1-2013/001194
- WO-A2-2013/104868
- KR-A- 20160 046 419
- US-A- 6 166 523

## Description

La présente invention concerne le domaine des transmissions hybrides pour véhicules automobiles. Plus précisément l'invention concerne un procédé de commande des organes d'une transmission hybride pour véhicule automobile comprenant d'une part un moteur thermique d'entraînement et, d'autre part, une machine électrique principale et une machine électrique auxiliaire, appelée HSG pour « High Voltage Starter Generator », liée mécaniquement en rotation au moteur thermique.

Les transmissions hybrides permettent de procurer à la chaîne de traction d'un véhicule automobile deux sources d'énergie, respectivement thermique et électrique, dont les apports de couple peuvent se cumuler (mode hybride), ou être utilisées séparément, soit dans un mode thermique pur, où la machine électrique ne fournit aucun couple, soit dans un mode électrique pur, où le moteur thermique ne fournit aucun couple à la chaîne de traction.

On connaît du document EP 2 851 229 A1 un contrôle pour assurer un couple nul en sortie d'une machine électrique liée mécaniquement en rotation à un moteur thermique.

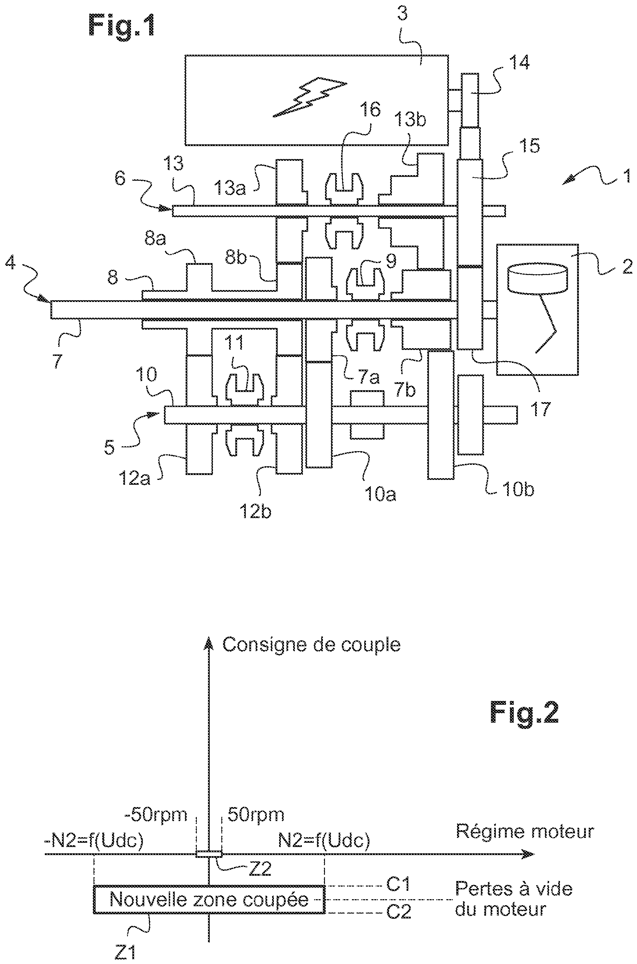

On connaît des architectures de transmission hybride où le groupe motopropulseur comprend une machine électrique principale et une machine électrique auxiliaire accouplée au moteur thermique. Une telle machine auxiliaire est dite HSG, pour « High Voltage Start Generator ». La présence de cette machine électrique auxiliaire permet d'ajouter à la transmission un grand nombre de fonctionnalités, notamment en ce qui concerne la rapidité du démarrage du moteur thermique. La figure 1 illustre de façon shématique un exemple de boîte de vitesse pour une telle architecture de transmission hybride. La transmission 1 est destinée à être intégrée dans un véhicule automobile comprenant d'une part, un moteur thermique d'entraînement 2 et, d'autre part une machine électrique principale (non représentée) et une machine électrique auxiliaire HSG 3. La machine électrique auxiliaire 3 est préférentiellement (mais non obligatoirement) un moteur à aimant permanent. La transmission 1 comprend une ligne primaire 4, une ligne secondaire 5 et une ligne auxiliaire 6. Des engrenages sont agencés respectivement entre la ligne primaire et la ligne secondaire et la ligne primaire et la ligne auxiliaire, de manière à transmettre le couple d'un ou des moteurs à un organe entraînant les roues du véhicule automobile.

La ligne primaire 4 comprend un arbre primaire plein 7, connecté partout moyen approprié au moteur thermique 2 et un arbre primaire creux 8, coaxial à l'arbre primaire plein 7. L'arbre primaire plein porte à rotation libre deux pignons fous 7a, 7b, pouvant être sélectivement liés à l'arbre primaire plein par un premier système de couplage 9, tel que par exemple un crabot. l'arbre primaire creux porte deux pignons fixes 8a, 8b.

La ligne secondaire 5 comprend un arbre secondaire plein 10, parallèle aux arbres primaires. L'arbre secondaire 10 porte à rotation libre deux pignons fous 12a, 12b pouvant être sélectivement liés à l'arbre secondaire 10 par un deuxième système de couplage 11, tel que par exemple un crabot. Il porte également deux pignons fixes 10a, 10b.

Le premier pignon fou 7a de l'arbre primaire plein 7 engrène avec le premier pignon fixe 10a de l'arbre secondaire 10 pour former une première descente d'engrenage, correspondant au deuxième rapport de réduction de la transmission 1. Le deuxième pignon fou 7b de l'arbre primaire plein 7 engrène avec le deuxième pignon fixe 10b de l'arbre secondaire 10 pour former une deuxième descente d'engrenage, correspondant au quatrième rapport de réduction de la transmission 1. Les deux pignons fixes 8a, 8b de l'arbre primaire creux 8 engrène respectivement avec le premier et le deuxième pignons fous 12a, 12b de l'arbre secondaire 10 pour former respectivement une troisième descente d'engrenage correspondant au premier rapport EV1 de la machine électrique principale et une quatrième descente d'engrenage correspondant au second rapport EV2 de cette même machine. Le deuxième dispositif de couplage 11 porté par l'arbre secondaire 10 permet d'engager ces deux rapports électriques EV1 et EV2.

La ligne auxiliaire 6 comprend un arbre auxiliaire plein 13, parallèle aux arbres primaires et secondaire, auquel est couplé la machine électrique auxiliaire 3 par un pignon fixe d'entrée 14 de la machine électrique auxiliaire engrènant sur un pignon fixe de couplage auxiliaire 15 porté par l'arbre auxiliaire plein 13. L'arbre auxiliaire plein 13 porte en rotation libre deux pignons fous 13a, 13b, pouvant être sélectivement liés à l'arbre auxiliaire plein 13 par un troisième système de couplage 16, tel que par exemple un crabot. Les deux pignons fous 13a, 13b de l'arbre auxiliaire plein 13 engrènent respectivement avec le deuxième pignon fixe 8b de l'arbre primaire creux 8 et le deuxième pignon fou 7b de l'arbre primaire plein 7.

L'arbre primaire plein 7 porte également un pignon fixe de couplage primaire 17 engrènant avec le pignon fixe de couplage 15 de l'arbre auxiliaire, assurant le passage permanent du mouvement sur l'arbre auxiliaire 13. Le moteur thermique 2 lié à l'arbre primaire plein 7 est ainsi relié en permanence au moteur électrique auxiliaire 3. Le moteur électrique auxiliaire est dit en mode entraîné et voit donc sa vitesse être imposée mécaniquement. Autrement dit, les deux moteurs, respectivement le moteur thermique 2 et le moteur électrique auxiliaire 3, tournent systématiquement à des vitesses proportionnelles suivant le rapport formé par la chaîne d'engrenage 14, 15 et 17. Or, dans de nombreuses phases, le moteur électrique auxiliaire n'a pas besoin d'être sollicité en couple. Il s'agit typiquement de phases de roulage du véhicule sur autoroute par exemple, où le véhicule n'a besoin que du couple du moteur thermique.

Dans ce cas, lorsque la loi de gestion d'énergie (LGE) du véhicule, qui détermine les consignes optimales à envoyer aux différents moteurs du groupe motopropulseur (GMP) du véhicule notamment en fonction des conditions de roulage, identifie que le GMP ne doit fonctionner qu'avec le moteur thermique, elle donne l'ordre de décrabotage du moteur électrique principal, permettant à celui-ci de s'arrêter de tourner. En revanche, comme il ressort de l'architecture de transmission décrite ci-dessus, il est impossible de décraboter le moteur électrique auxiliaire HSG, si bien que celui-ci continue à tourner en fonction de la vitesse du moteur thermique, tandis qu'une consigne de couple à 0 Nm lui est envoyée.

Or, pour avoir un couple nul sur l'arbre en sortie du moteur électrique auxiliaire, il est nécessaire de faire circuler un très faible courant dans les phases du moteur pour compenser les pertes mécaniques générées par la rotation du moteur électrique auxiliaire. Autrement dit, dans l'état de l'art, lorsqu'une consigne de couple nul est envoyée au moteur électrique auxiliaire, l'onduleur qui commande ce dernier doit réguler de très faibles courants afin de pouvoir assurer un couple nul sur l'arbre en sortie de moteur électrique auxiliaire.

Aussi, il existe un besoin pour optimiser la consommation électrique de l'onduleur pilotant le moteur électrique auxiliaire accouplé mécaniquement au moteur thermique, dans les phases de roulage du véhicule dans lesquelles le moteur électrique auxiliaire n'est pas sollicité en couple.

Ce but est atteint grâce à un procédé de commande des organes d'une transmission hybride pour un véhicule automobile comprenant d'une part, un moteur thermique d'entraînement et, d'autre part, une machine électrique principale et une machine électrique auxiliaire liée mécaniquement en rotation audit moteur thermique, dans lequel on détermine des consignes de couple à transmettre aux dits organes suivant un choix de répartition de couple entre chacun desdits organes, ledit procédé comprenant une étape d'identification d'au moins une phase de roulage du véhicule où seul ledit moteur thermique nécessite d'être sollicité en couple et une étape de régulation, dans ladite phase de roulage, des courants fournis à ladite machine électrique auxiliaire par un onduleur de commande de ladite machine électrique auxiliaire relié à une batterie haute tension du véhicule, afin d'assurer un couple nul en sortie de ladite machine électrique auxiliaire, ledit procédé étant caractérisé en ce qu'il comprend :
une étape de coupure de ladite régulation des courants dans laquelle l'onduleur réalise un courant nul, ladite étape de coupure de ladite régulation étant activée quand la vitesse de rotation de ladite machine électrique auxiliaire est inférieure en valeur absolue à une vitesse prédéterminée de seuil, pour une région de consigne de couple dans laquelle le couple qui doit être fourni par ladite machine électrique auxiliaire correspond sensiblement aux pertes mécaniques à vide générées par ladite machine électrique auxiliaire.

Avantageusement, ladite vitesse prédéterminée de seuil dépend de la tension de la batterie haute tension du véhicule.

De préférence, on active l'étape de coupure de la régulation en fonction d'une table fournissant la vitesse prédéterminée de seuil en fonction de la tension de la batterie haute tension du véhicule.

Le procédé est préférentiellement mis en œuvre pour une machine électrique auxiliaire de type moteur à aimant permanent.

Selon une variante, ladite machine électrique auxiliaire est de type moteur électrique synchrone à rotor bobiné, ladite étape de coupure de ladite régulation étant alors activée quand le courant rotor est inférieur à un courant prédéterminé de seuil, en lieu et place de la condition sur la vitesse de rotation de ladite machine électrique auxiliaire.

Avantageusement, ladite région de consigne de couple est centrée autour de -0,3Nm, préférentiellement avec une marge en plus ou en moins de 0,1 Nm.

De préférence, lorsque l'étape de coupure de la régulation est activée, les interrupteurs de puissance de l'onduleur sont utilisés exclusivement en mode ouvert.

L'invention concerne également un dispositif de commande des organes d'une transmission hybride pour un véhicule automobile comprenant d'une part, un moteur thermique d'entraînement et, d'autre part, une machine électrique principale et une machine électrique auxiliaire liée mécaniquement en rotation audit moteur thermique, ledit dispositif comprenant une unité électronique de contrôle apte à déterminer des consignes de couple à transmettre aux dits organes suivant un choix de répartition de couple entre chacun desdits organes, ladite unité électronique de contrôle étant apte à identifier au moins une phase de roulage du véhicule où seul ledit moteur thermique nécessite d'être sollicité en couple et à piloter, dans ladite phase de roulage, un onduleur de commande de ladite machine électrique auxiliaire relié à une batterie haute tension du véhicule, de façon à réguler les courants fournis à ladite machine électrique auxiliaire afin d'assurer un couple nul en sortie de ladite machine électrique auxiliaire, caractérisé en ce que ladite unité électronique de contrôle est apte à activer une coupure de la régulation des courants par l'onduleur de sorte que l'onduleur réalise un courant nul, ladite coupure étant activée quand la vitesse de rotation de ladite machine électrique auxiliaire est inférieure en valeur absolue à une vitesse prédéterminée de seuil, pour une région de consigne de couple dans laquelle le couple qui doit être fourni par ladite machine électrique auxiliaire correspond sensiblement aux pertes mécaniques à vide générées par ladite machine électrique auxiliaire.

Avantageusement, ladite unité électronique de contrôle est apte à activer une coupure de la régulation des courants par l'onduleur en fonction d'une table fournissant la vitesse prédéterminée de seuil en fonction de la tension de la batterie haute tension du véhicule.

Ce dispositif peut par exemple comprendre ou être intégré dans un ou plusieurs processeurs.

Il est en outre proposé un véhicule automobile comprenant une transmission hybride comprenant d'une part, un moteur thermique d'entraînement et, d'autre part, une machine électrique principale et une machine électrique auxiliaire liée mécaniquement en rotation audit moteur thermique, ledit véhicule comprenant un dispositif de commande tel que décrit ci-dessus.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 illustre schématiquement une transmission hybride dans laquelle le procédé de commande selon l'invention peut être mis en œuvre ;
- la figure 2 illustre schématiquement la zone de coupure de la régulation des courants par l'onduleur, conformément au principe de l'invention, dans le plan couple/vitesse de rotation, autrement dit, la zone définie dans ce plan dans laquelle l'onduleur qui pilote la machine électrique auxiliaire est commandé dans un mode, dit « onduleur coupé », où il arrête de réguler les courants.

L'invention vise à permettre d'optimiser la consommation de l'onduleur pilotant le moteur électrique HSG dans les phases de roulage du véhicule où ce dernier n'est pas sollicité en couple, mais tourne quand même à la vitesse du moteur thermique, auquel il est mécaniquement lié en rotation, suivant l'architecture de transmission hybride illustrée à la figure 1. En effet, dans de nombreuses phases de roulage du véhicule, incluant typiquement un long roulage sur autoroute, l'apport du moteur électrique HSG n'est pas nécessaire et le véhicule n'a besoin que du couple fourni par le moteur thermique du véhicule. On a vu que, usuellement, lorsque qu'une telle phase de roulage est identifiée, la loi de gestion de l'énergie du véhicule est conçue pour transmettre une consigne de couple nul au moteur HSG, qui nécessite cependant de réguler un faible courant dans les phases du moteur électrique pour compenser les pertes mécaniques liées à l'entraînement en rotation du moteur électrique par le moteur thermique, au détriment de la consommation de l'onduleur pilotant le moteur électrique.

Aussi, conformément au principe de l'invention, lorsqu'une phase de roulage du véhicule est identifiée où seul un couple fourni par le moteur thermique est nécessaire, plutôt que de réguler des courants dans la machine électrique auxiliaire HSG à couple nul demandé, la loi de gestion de l'énergie du véhicule est conçue pour activer, lorsque des conditions prédéfinies sont atteintes, un mode de commande de l'onduleur qui pilote la machine électrique dit « onduleur coupé », dans lequel l'onduleur arrête de réguler les courants et réalise un courant nul.

Le mode de fonctionnement « onduleur coupé », consiste à mettre en œuvre un pilotage des transistors de puissance de l'onduleur, de type transistors bipolaires à grille isolée (IGBT), dans lequel l'ensemble des transistors sont utilisés de façon permanente en mode ouvert.

Lorsque ce mode de fonctionnement est activé, l'onduleur ne consomme alors plus aucun courant sur le réseau électrique de bord haute tension auquel il est reliée, alimenté par la batterie haute tension du véhicule. Le niveau de charge de la batterie peut donc demeurer constant, si aucun autre consommateur du réseau de bord haute tension n'est présent.

La figure 2 illustre la zone de coupure de la régulation des courants dans la machine électrique auxiliaire, dans le plan couple/vitesse de rotation, permettant de définir les conditions d'activation du mode de fonctionnement « onduleur coupé », lorsqu'une phase de roulage du véhicule n'ayant besoin que du couple fourni par le moteur thermique a été identifiée. Cette zone est définie par la zone hachurée référencée Z1 sur la figure 2, bornée d'une part, entre des vitesses de rotation non nulles -N2 et N2 de la machine électrique auxiliaire et, d'autre part, entre des valeurs de couple C1 et C2, correspondant à des paramètres de couple réglables fournissant une marge en plus et en moins autour d'une valeur de couple sur laquelle est centrée la zone de coupure Z1, correspondant aux pertes mécaniques à vide générées par la machine électrique auxiliaire.

Par ailleurs, la zone hachurée référencée Z2 sur la figure 2, correspond à une zone de fonctionnement à consigne de couple nul pour la machine électrique auxiliaire et à vitesse de rotation nulle (ou quasi nulle, soit inférieure à 50rpm en valeur absolue), dans laquelle l'onduleur pourrait également arrêter de réguler les courants. Cela permet en effet d'éviter de consommer de l'énergie pour réguler des courants à consigne de couple nul, car à vitesse nulle ou quasi nulle, et sans pilotage des transistors IGBT (i.e. tous les transistors IGBT ouverts), le moteur électrique ne produit aucun couple (il n'y a en effet pas de pertes mécanique à vitesse de rotation nulle). Cependant, cette zone est très rarement atteinte en roulage.

Comme illustré à la figure 2, il ressort selon l'invention que la zone de fonctionnement Z1 où l'onduleur peut être commandé pour arrêter de réguler, peut être étendue par rapport au cas correspondant à la zone de fonctionnement Z2. En effet, pour une machine électrique HSG de type moteur à aimant permanent, tant que la tension d'alimentation Udc de la batterie haute tension est supérieure à la force électro-motrice (FEM) du moteur, il est possible d'ouvrir tous les transistors IGBT de l'onduleur pour réaliser un courant nul. La FEM étant proportionnelle à la vitesse du moteur, on pourra donc couper l'onduleur si la vitesse est inférieure en valeur absolue à une vitesse prédéterminée de seuil N2 dépendant de la tension de la batterie haute tension Udc. La différence par rapport au cas à consigne de couple nul et à vitesse nulle, décrit par la zone de fonctionnement Z1, est que le moteur HSG est entraîné de sorte qu'en rotation à courant nul, le moteur HSG génère des pertes mécaniques qui ne sont pas compensées. Le couple réalisé en rotation dans ce cas par le moteur HSG sera par exemple de l'ordre de -0,3Nm. Le mode « onduleur coupé » sera donc activé à vitesse non nulle dépendant de la tension Udc de la batterie, pour une consigne de couple centrée autour de -0,3Nm, correspondant aux pertes à vide du moteur HSG (avec une marge en plus ou en moins de 0,1Nm par exemple).

Il est à noter que lorsque la FEM dépasse la tension d'alimentation Udc de l'onduleur, il convient de ne pas rester dans le mode « onduleur coupé » où tous les transistors IGBT sont commandés en mode ouvert car, dans ce cas, un couple régénératif serait produit. Il convient donc, à vitesse élevée, de commander l'onduleur de façon à rebasculer dans le mode de régulation de courant nominal.

La zone Z1 « sans régulation », où l'onduleur ne régule plus les courants et est commandé de sorte que tous les tansistors IGBT soient en mode ouvert, est donc centrée en couple sur les pertes mécaniques à vide du moteur électrique HSG (-0,3Nm comme expliqué ci-dessus), via les deux paramètres réglables C1 et C2, calés par exemple à -0.2Nm et -0.4Nm, et est bornée en régime moteur à une vitesse prédéterminée de seuil, en valeur absolue, dépendant de la tension Udc. Cette vitesse prédéterminée de seuil N2 correspond à la vitesse de base du moteur électrique pour un niveau de tension batterie Udc à l'instant t, est peut être fournie par une table fournissant des valeurs de vitesse prédéterminée de seuil N2 dépendant de la tension Udc. Par exemple, cette vitesse prédéterminée de seuil peut être de 13500rpm à 400V, 10000rpm à 300V, 8400rpm à 250V.

Ainsi, dans les phases de roulage du véhicule où ce dernier n'a besoin que du couple du moteur thermique, plutôt que de réguler de très faibles courants dans le moteur électrique HSG afin d'assurer un couple nul sur l'arbre moteur, l'invention prévoit d'activer un mode de coupure de la régulation des courants où l'onduleur arrête de réguler, dans des conditions d'activation prédéfinies, comme expliqué ci-dessus. En appliquant ce principe, on obtient des gains de consommation de l'onduleur de l'ordre de 150W. Le fait de couper la régulation sur ces phases permet donc d'économiser 150W, sans perdre de précision de couple, la consigne étant positionnée aux pertes mécaniques du moteur (-0,3Nm comme expliqué plus haut).

Suivant une variante de réalisation, dans le cas où la machine électrique auxiliaire est de type moteur synchrone à rotor bobiné, le principe est le même mais la zone de fonctionnement Z1 sans régulation peut couvrir toute la zone de régime moteur, car la FEM du moteur peut toujours être nulle quel que soit le régime moteur. Aussi, on pourra toujours couper l'onduleur sans condition sur le régime moteur, autrement dit quelle que soit la vitesse de rotation de ladite machine électrique auxiliaire, mais à condition cependant que le courant rotor soit proche de zéro. Par conséquent, dans cette variante, l'activation du mode « onduleur coupé » sera conditionnée non plus par comparaison du régime moteur avec une vitesse prédéterminée de seuil, mais par comparaison du courant rotor avec un courant prédéterminé de seuil.

On prévoit alors que la loi de gestion de l'énergie du véhicule profite au maximum de cette nouvelle zone de fonctionnement Z1 définie par l'invention. En l'état actuel, pendant un roulage à vitesse stabilisée sur autoroute, à couple roue constant, la loi de gestion de l'énergie du véhicule cherche à maintenir un niveau de charge de la batterie du véhicule. Actuellement, la loi de gestion de l'énergie du véhicule envoit une consigne de couple nul au moteur HSG lorsque la recharge de la batterie n'est pas requise et une consigne de couple fortement négatif lorsque la recharge de la batterie est requise. On note qu'à 130km/h stabilisé en rapport 4, le moteur thermique tournera à environ 3000rpm et le moteur HSG tournera alors à 7500rpm.

Grâce au principe de l'invention, dans une telle phase de roulage, la loi de gestion de l'énergie du véhicule ne demandera plus une consigne de couple nul au moteur HSG, mais un couple compris dans la zone de fonctionnement sans régulation Z1, de façon à réduire la consommation énergétique de l'onduleur. Dans la mesure où le moteur HSG tourne à 7500rpm, la zone de fonctionnement Z1 peut effectivement être atteinte, compte tenu des niveaux de tension batterie Udc situés entre 250V et 400V. En effet, le régime moteur, qui est égal à 7500rpm, est bien inférieur à la vitesse prédéterminée de seuil fixée à 8400rpm pour une tension Udc égale à 250V.

Afin de mieux comprendre l'intérêt de commander le moteur HSG dans cette nouvelle zone de fonctionnement Z1, considérons un exemple concret dans un cas où il n'y a aucun autre consommateur que le moteur HSG sur le réseau haute tension alimentée par la batterie haute tension du véhicule.

On a vu qu'en l'état actuel, la loi de gestion de l'énergie du véhicule transmet une consigne de couple nul au moteur HSG dans les cas où la recharge de la batterie n'est pas requise. A consigne de couple nul, comme expliqué plus haut, l'onduleur consomme environ 150W correspondant à sa consommation intrinsèque en fonctionnement, à laquelle s'ajoute environ une consommation de 235W correspondant à la compensation des pertes mécaniques générées par le moteur HSG (-0,3Nm à 7500rpm), soit un total consommé d'environ 385W. Le moteur thermique fournit quant à lui uniquement le couple nécessaire au maintien de la vitesse du véhicule, soit environ 20kW à 130km/h. Ainsi pour assurer un niveau de charge constant de la batterie en moyenne, la loi de gestion de l'énergie du véhicule devra la moitié du temps recharger la batterie de façon à compenser la puissance consommée de 385W à consigne de couple nul reçue par le moteur HSG. Pour ce faire, la loi de gestion de l'énergie du véhicule pourra envoyer au moteur HSG une consigne de couple négatif correspondant à une recharge de -385W au niveau de la batterie, et le moteur thermique devra compenser le couple ainsi absorbé par le moteur HSG, en fournissant un peu de puissance en supplément. La puissance demandée au moteur thermique lors de la recharge de la batterie passera alors à 20770W (20kW + 770W de recharge (235W de pertes du moteur HSG + 385W de recharge batterie + 150W de consommation de l'onduleur pour avoir les 385W à la batterie)). En moyenne, le moteur thermique fournit donc une puissance de 20385W.

Avec la mise en œuvre de la nouvelle zone de fonctionnement Z1, le couple demandé au moteur HSG sera compris dans la zone de fonctionnement Z1, de sorte que la loi de gestion de l'énergie demandera -0,3Nm au moteur HSG. Dans ces conditions, on a vu que la consommation de l'onduleur sera nulle. Le moteur thermique devra alors fournir en permanence 20235 W (soit 20kW + 235W de pertes du moteur HSG à -0,3Nm). On constate donc que la prise en compte de la nouvelle zone de fonctionnement Z1 par la loi de gestion de l'énergie du véhicule permet d'économiser la consommation de l'onduleur pilotant le moteur HSG, soit 150W. Par exemple , sur un trajet Paris-Marseilles d'une durée de 8h, l'énergie économisée correspond à 20% de niveau de charge de la batterie haute tension du véhicule.

Autrement dit, l'invention permet d'économiser 150W sur toutes les phases de roulage du véhicule dans lesquelles le moteur électrique auxiliaire n'a pas à produire de couple pour le véhicule hybride.

De façon plus générale, l'invention peut trouver une application dans tout système de pilotage d'un moteur électrique qui voit sa vitesse imposée mécaniquement et qui n'est pas toujours sollicité en couple.

## Revendications

1. Procédé de commande des organes d'une transmission hybride (1) pour un véhicule automobile comprenant d'une part, un moteur thermique d'entraînement (2) et, d'autre part, une machine électrique principale et une machine électrique auxiliaire (3) liée mécaniquement en rotation audit moteur thermique, dans lequel on détermine des consignes de couple à transmettre aux dits organes suivant un choix de répartition de couple entre chacun desdits organes, ledit procédé comprenant une étape d'identification d'au moins une phase de roulage du véhicule où seul ledit moteur thermique (2) nécessite d'être sollicité en couple et une étape de régulation, dans ladite phase de roulage, des courants fournis à ladite machine électrique auxiliaire (3) par un onduleur de commande de ladite machine électrique auxiliaire relié à une batterie haute tension du véhicule, afin d'assurer un couple nul en sortie de ladite machine électrique auxiliaire, ledit procédé étant **caractérisé en ce qu'**il comprend :
une étape de coupure de ladite régulation des courants dans laquelle l'onduleur réalise un courant nul, ladite étape de coupure de ladite régulation étant activée quand la vitesse de rotation de ladite machine électrique auxiliaire est inférieure en valeur absolue à une vitesse prédéterminée de seuil (N2), pour une région de consigne de couple (C1, C2) dans laquelle le couple qui doit être fourni par ladite machine électrique auxiliaire correspond sensiblement aux pertes mécaniques à vide générées par ladite machine électrique auxiliaire.

2. Procédé selon la revendication 1, **caractérisé en ce que** ladite vitesse prédéterminée de seuil dépend de la tension de la batterie haute tension du véhicule.

3. Procédé selon la revendication 2, **caractérisé en ce qu'**on active l'étape de coupure de la régulation en fonction d'une table fournissant la vitesse prédéterminée de seuil en fonction de la tension de la batterie haute tension du véhicule.

4. Procédé selon l'une quelconque des revendications précédentes, **caractérisé en ce que** ladite machine électrique auxiliaire comprend un moteur à aimant permanent.

5. Procédé selon la revendication 1, **caractérisé en ce que** ladite machine électrique auxiliaire comprend un moteur électrique synchrone à rotor bobiné, et dans lequel ladite étape de coupure de ladite régulation est activée quand le courant rotor est inférieur à un courant prédéterminé de seuil, en lieu et place de la condition sur la vitesse de rotation de ladite machine électrique auxiliaire.

6. Procédé selon l'une quelconque des revendications précédentes, dans lequel ladite région de consigne de couple est centrée autour de -0,3Nm, préférentiellement avec une marge en plus ou en moins de 0,1Nm.

7. Procédé selon l'une quelconque des revendications précédentes, **caractérisé en ce que**, lorsque l'étape de coupure de la régulation est activée, les interrupteurs de puissance de l'onduleur sont utilisés exclusivement en mode ouvert.

8. Dispositif de commande des organes d'une transmission hybride pour un véhicule automobile comprenant d'une part, un moteur thermique d'entraînement (2) et, d'autre part, une machine électrique principale et une machine électrique auxiliaire (3) liée mécaniquement en rotation audit moteur thermique, ledit dispositif comprenant une unité électronique de contrôle apte à déterminer des consignes de couple à transmettre aux dits organes suivant un choix de répartition de couple entre chacun desdits organes, ladite unité électronique de contrôle étant apte à identifier au moins une phase de roulage du véhicule où seul ledit moteur thermique (2) nécessite d'être sollicité en couple et à piloter, dans ladite phase de roulage, un onduleur de commande de ladite machine électrique auxiliaire (3) relié à une batterie haute tension du véhicule, de façon à réguler les courants fournis à ladite machine électrique auxiliaire afin d'assurer un couple nul en sortie de ladite machine électrique auxiliaire, **caractérisé en ce que** ladite unité électronique de contrôle est apte à activer une coupure de la régulation des courants par l'onduleur de sorte que l'onduleur réalise un courant nul, ladite coupure étant activée quand la vitesse de rotation de ladite machine électrique auxiliaire est inférieure en valeur absolue à une vitesse prédéterminée de seuil (N2), pour une région de consigne de couple (C1, C2) dans laquelle le couple qui doit être fourni par ladite machine électrique auxiliaire correspond sensiblement aux pertes mécaniques à vide générées par ladite machine électrique auxiliaire.

9. Dispositif selon la revendication 8, caractérisé en ce ladite unité électronique de contrôle est apte à activer une coupure de la régulation des courants par l'onduleur en fonction d'une table fournissant la vitesse prédéterminée de seuil en fonction de la tension de la batterie haute tension du véhicule.

10. Véhicule automobile comprenant une transmission hybride comportant d'une part, un moteur thermique d'entraînement et, d'autre part, une machine électrique principale et une machine électrique auxiliaire liée mécaniquement en rotation audit moteur thermique, ledit véhicule comprenant un dispositif de commande selon la revendication 8 ou 9.

## Patentansprüche

1. Verfahren zur Steuerung der Elemente eines Hybridgetriebes (1) für ein Kraftfahrzeug, welches einerseits einen Antriebsverbrennungsmotor (2) und andererseits eine Hauptelektromaschine und eine mit dem Verbrennungsmotor mechanisch drehverbundene Hilfselektromaschine (3) umfasst, wobei Sollwerte eines auf die Elemente zu übertragenden Drehmoments gemäß einer Wahl der Drehmomentverteilung zwischen diesen einzelnen Elementen bestimmt werden, wobei das Verfahren einen Schritt der Identifizierung wenigstens einer Fahrphase des Fahrzeugs umfasst, in der nur der Verbrennungsmotor (2) mit einem Drehmoment beaufschlagt werden muss, und einen Schritt der Regelung, in der Fahrphase, der Ströme, die der Hilfselektromaschine (3) von einem Wechselrichter zur Steuerung der Hilfselektromaschine zugeführt werden, der mit einer Hochspannungsbatterie des Fahrzeugs verbunden ist, um ein Drehmoment null am Ausgang der Hilfselektromaschine sicherzustellen, wobei das Verfahren **dadurch gekennzeichnet ist, dass** es umfasst:
einen Schritt der Unterbrechung der Regelung der Ströme, in welchem der Wechselrichter einen Strom null realisiert, wobei der Schritt der Unterbrechung der Regelung aktiviert wird, wenn für einen Drehmoment-Sollwertbereich (C1, C2), in welchem das Drehmoment, das von der Hilfselektromaschine geliefert werden muss, im Wesentlichen den mechanischen Leerlaufverlusten entspricht, die von der Hilfselektromaschine erzeugt werden, die Drehzahl der Hilfselektromaschine dem absoluten Betrag nach kleiner als eine vorbestimmte Schwellendrehzahl (N2) ist.

2. Verfahren nach Anspruch 1, **dadurch gekennzeichnet, dass** die vorbestimmte Schwellendrehzahl von der Spannung der Hochspannungsbatterie des Fahrzeugs abhängt.

3. Verfahren nach Anspruch 2, **dadurch gekennzeichnet, dass** der Schritt der Unterbrechung der Regelung in Abhängigkeit von einer Tabelle aktiviert wird, welche die vorbestimmte Schwellendrehzahl in Abhängigkeit von der Spannung der Hochspannungsbatterie des Fahrzeugs liefert.

4. Verfahren nach einem der vorhergehenden Ansprüche, **dadurch gekennzeichnet, dass** die Hilfselektromaschine einen Permanentmagnetmotor umfasst.

5. Verfahren nach Anspruch 1, **dadurch gekennzeichnet, dass** die Hilfselektromaschine einen elektrischen Synchronmotor mit gewickeltem Rotor umfasst, und wobei der Schritt der Unterbrechung der Regelung aktiviert wird, wenn der Rotorstrom kleiner als ein vorbestimmter Schwellenstrom, anstelle der Bedingung bezüglich der Drehzahl der Hilfselektromaschine.

6. Verfahren nach einem der vorhergehenden Ansprüche, wobei der Drehmoment-Sollwertbereich um -0,3 Nm zentriert ist, vorzugsweise mit einer Toleranz von plus oder minus 0,1 Nm.

7. Verfahren nach einem der vorhergehenden Ansprüche, **dadurch gekennzeichnet, dass**, wenn der Schritt der Unterbrechung der Regelung aktiviert ist, die Leistungsschalter des Wechselrichters ausschließlich im offenen Modus verwendet werden.

8. Vorrichtung zur Steuerung der Elemente eines Hybridgetriebes für ein Kraftfahrzeug, welches einerseits einen Antriebsverbrennungsmotor (2) und andererseits eine Hauptelektromaschine und eine mit dem Verbrennungsmotor mechanisch drehverbundene Hilfselektromaschine (3) umfasst, wobei die Vorrichtung eine elektronische Steuereinheit umfasst, die geeignet ist, Sollwerte eines auf die Elemente zu übertragenden Drehmoments gemäß einer Wahl der Drehmomentverteilung zwischen diesen einzelnen Elementen zu bestimmen, wobei die elektronische Steuereinheit geeignet ist, wenigstens eine Fahrphase des Fahrzeugs zu identifizieren, in der nur der Verbrennungsmotor (2) mit einem Drehmoment beaufschlagt werden muss, und in der Fahrphase einen Wechselrichter zur Steuerung der Hilfselektromaschine (3), der mit einer Hochspannungsbatterie des Fahrzeugs verbunden ist, zu steuern, so dass die der Hilfselektromaschine zugeführten Ströme geregelt werden, um ein Drehmoment null am Ausgang der Hilfselektromaschine sicherzustellen, **dadurch gekennzeichnet, dass** die elektronische Steuereinheit geeignet ist, eine Unterbrechung der Regelung der Ströme durch den Wechselrichter zu aktivieren, so dass der Wechselrichter einen Strom null realisiert, wobei die Unterbrechung aktiviert wird, wenn für einen Drehmoment-Sollwertbereich (C1, C2), in welchem das Drehmoment, das von der Hilfselektromaschine geliefert werden muss, im Wesentlichen den mechanischen Leerlaufverlusten entspricht, die von der Hilfselektromaschine erzeugt werden, die Drehzahl der Hilfselektromaschine dem absoluten Betrag nach kleiner als eine vorbestimmte Schwellendrehzahl (N2) ist.

9. Vorrichtung nach Anspruch 8, **dadurch gekennzeichnet, dass** die elektronische Steuereinheit geeignet ist, eine Unterbrechung der Regelung der Ströme durch den Wechselrichter in Abhängigkeit von einer Tabelle zu aktivieren, welche die vorbestimmte Schwellendrehzahl in Abhängigkeit von der Spannung der Hochspannungsbatterie des Fahrzeugs liefert.

10. Kraftfahrzeug, welches ein Hybridgetriebe umfasst, das einerseits einen Antriebsverbrennungsmotor und andererseits eine Hauptelektromaschine und eine mit dem Verbrennungsmotor mechanisch drehverbundene Hilfselektromaschine aufweist, wobei das Fahrzeug eine Vorrichtung zur Steuerung nach Anspruch 8 oder 9 umfasst.

## Claims

1. Method for controlling the members of a hybrid transmission (1) for a motor vehicle comprising firstly a drive combustion engine (2) and secondly a main electric machine and an auxiliary electric machine (3) linked mechanically in rotation to said combustion engine, in which torque setpoints to be sent to said members are determined according to a torque distribution selection between each of said members, said method including a step for identifying at least one movement phase of the vehicle in which said combustion engine (2) only is required to deliver torque and a regulation step, within said movement phase, for regulating the currents supplied to said auxiliary electric machine (3) by a control inverter of said auxiliary electric machine linked to a high-voltage battery of the vehicle, in order to ensure zero torque at the output of said auxiliary electric machine, said method being **characterized in that** it includes:
a step in which said current regulation is cut, in which the inverter delivers a zero current, said step of cutting said regulation being activated when the absolute value of the rotational speed of said auxiliary electric machine is less than a predetermined threshold speed (N2) for a torque setpoint range (C1, C2) in which the torque to be delivered by said auxiliary electric machine substantially matches the no-load mechanical losses generated by said auxiliary electric machine.

2. Method according to Claim 1, **characterized in that** said predetermined threshold speed depends on the voltage of the high-voltage battery of the vehicle.

3. Method according to Claim 2, **characterized in that** the regulation cutting step is activated as a function of a table providing the predetermined threshold speed as a function of the voltage of the high-voltage battery of the vehicle.

4. Method according to any one of the preceding claims, **characterized in that** said auxiliary electric machine is a permanent-magnet motor.

5. Method according to Claim 1, **characterized in that** said auxiliary electric machine comprises a wound-rotor synchronous electric motor, and in which said step of cutting said regulation is activated when the rotor current is less than a predetermined threshold current, instead of the condition relating to the rotational speed of said auxiliary electric machine.

6. Method according to any one of the preceding claims, in which said torque setpoint range is centered about -0.3 nm, preferably with a margin of 0.1 nm above and below.

7. Method according to any one of the preceding claims, **characterized in that**, when the regulation cutting step is activated, the power switches of the inverter are used exclusively in open state.

8. Device for controlling the members of a hybrid transmission for a motor vehicle comprising firstly a drive combustion engine (2) and secondly a main electric machine and an auxiliary electric machine (3) linked mechanically in rotation to said combustion engine, said device having an electronic control unit designed to determine torque setpoints to be sent to said members determined according to a torque distribution selection between each of said members, said electronic control unit being designed to identify at least one movement phase of the vehicle in which said combustion engine (2) only is required to deliver torque and to command, within said movement phase, a control inverter of said auxiliary electric machine (3) linked to a high-voltage battery of the vehicle, to regulate the currents supplied to said auxiliary electric machine in order to ensure zero torque at the output of said auxiliary electric machine, **characterized in that** said electronic control unit is designed to trigger a cutting of the current regulation by the inverter so that the inverter delivers a zero current, said cutting being activated when the absolute value of the rotational speed of said auxiliary electric machine is less than a predetermined threshold speed (N2) for a torque setpoint range (C1, C2) in which the torque to be delivered by said auxiliary electric machine substantially matches the no-load mechanical losses generated by said auxiliary electric machine.

9. Device according to Claim 8, **characterized in that** said electronic control unit is designed to activate a cutting of the current regulation by the inverter as a function of a table providing the predetermined threshold speed as a function of the voltage of the high-voltage battery of the vehicle.

10. Motor vehicle including a hybrid transmission comprising firstly a drive combustion engine and secondly a main electric machine and an auxiliary electric machine linked mechanically in rotation to said combustion engine, said vehicle including a control device according to Claim 8 or 9.
